# EUROPÄISCHE PATENTSCHRIFT

(11) **EP 0 708 746 B1**
(45) Veröffentlichungstag und Bekanntmachung des Hinweises auf die Patenterteilung: **29.04.1998**
(21) Anmeldenummer: 94919677.8
(22) Anmeldetag: 01.07.1994
(51) Int. Cl.: C04B 24/30, C04B 24/16, C08F 283/00, C09K 7/02, E21B 33/13

(54) **PFROPFPOLYMERE VON KETON-ALDEHYD-KONDENSATIONS- BZW. CO-KONDENSATIONSPRODUKTEN**
GRAFT POLYMERS OF KETO-ALDEHYDE CONDENSATION OR CO-CONDENSATION PRODUCTS
POLYMERES GREFFES DE PRODUITS DE CONDENSATION CETONE-ALDEHYDE OU DE PRODUITS DE CO-CONDENSATION

(30) Priorität: 02.07.1993 DE 4322112
(43) Veröffentlichungstag der Anmeldung: 01.05.1996
(73) Patentinhaber: SKW Trostberg Aktiengesellschaft, 83308 Trostberg (DE)
(72) Erfinder: FELIXBERGER, Josef, D-83278 Traunstein (DE); PLANK, Johann, D-83308 Trostberg (DE)
(74) Vertreter: Huber, Bernhard, Dipl.-Chem.
(86) Internationale Anmeldenummer: EP9402160
(87) Internationale Veröffentlichungsnummer: WO9501315

(56) Entgegenhaltungen:
- EP-A- 0 176 673
- CHEMICAL ABSTRACTS, vol. 76, no. 12, 20. März 1972, Columbus, Ohio, US; abstract no. 60468n, WAAG THEODOR 'COPOLYMERS FROM ACETONE-FORMALDEHYDE CONDENSATION PRODUCTS' Seite 30 ;Spalte 2 ;

## Beschreibung

Gegenstand der vorliegenden Erfindung sind Pfropfpolymere von Keton-Aldehyd-Kondensationsprodukten bzw. Co-Kondensationsprodukten und/oder deren ein- oder mehrwertige Metallverbindungen, ihre Herstellung und deren Verwendung.

Keton-Aldehyd-Kondensations- bzw. Co-Kondensationsprodukte sind seit längerer Zeit bekannt. So werden bspw. in der DE-AS 23 41 923 gut wasserlösliche Kondensationsprodukte aus Cycloalkanonen und Formaldehyd unter Verwendung von Natriumsulfit als Säuregruppen einführender Stoff beschrieben. Ein gravierender Nachteil dieser Kondensationsprodukte ist jedoch deren geringe thermische Stabilität, wodurch deren Anwendungsbereich sehr stark eingeschränkt wird.

Eine gute Thermostabilität weisen die Säuregruppen enthaltende Kondensationsprodukte von Aldehyden und Ketonen entsprechend der DE-OS 31 44 673 bzw. Co-Kondensationsprodukte entsprechend der DE-OS 33 15 152 sowie die Metallverbindungen dieser (Co-) Kondensationsprodukte entsprechend der DE-OS 34 29 068 auf. Diese Produkte können zwar als Verdickungsmittel, Retentionsmittel, oberflächenaktive Mittel, Dispergiermittel oder Verflüssigungsmittel für wäßrige Systeme eingesetzt werden, doch sind die betreffenden Produkteigenschaften in manchen Anwendungsbereichen nicht optimal.

Der vorliegenden Erfindung lag daher die Aufgabe zugrunde, die Keton-Aldehyd-Kondensations- bzw. Co-Kondensationsprodukte bzw. deren Metallverbindungen so zu modifizieren, daß die anwendungstechnischen Eigenschaften der entsprechenden Derivate weiter verbessert werden.

Diese Aufgabe wurde erfindungsgemäß durch die Bereitstellung von Pfropfpolymeren von Keton-Aldehyd-Kondensations- bzw. Co-Kondensationsprodukten und/oder deren ein- oder mehrwertige Metallverbindungen gelöst, die dadurch gekennzeichnet sind, daß das Kondensationsprodukt
a) aus symmetrischen oder unsymmetrischen Ketonen mit aliphatischen, araliphatischen, cyclischen oder aromatischen Kohlenwasserstoffresten mit mindestens einem nichtaromatischen Rest,
b) einem Aldehyd der Formel R-(CHO)ₙ, wobei n = 1 bis 2 und R = Wasserstoff, ein aliphatischer, araliphatischer, aromatischer oder heterocyclischer Rest sein kann, und
c) ggf. aus Säuregruppen, vorzugsweise aus Carboxy-, Sulfo-, Sulfamido-, Sulfoxy-, Sulfoalkylamin- oder Sulfoalkyloxy-Gruppen besteht,
an welches anionische und/oder nichtionische und/oder kationische ungesättigte Monomere gepfropft worden sind.

Es hat sich nämlich überraschenderweise gezeigt, daß sich die Eigenschaften durch Aufpfropfung der betreffenden ungesättigten Monomere auf die (Co-)Kondensationsprodukte bzw. deren Metallverbindungen gezielt beeinflussen lassen.

Die Grundkörper der erfindungsgemäßen Pfropfpolymere bestehen aus Keton-Aldehyd-Kondensations- bzw. Co-Kondensationsprodukten und/oder deren ein- oder mehrwertige Metallverbindungen, wie sie bspw. in der DE-OS 31 44 673, der DE-OS 33 15 152 oder DE-OS 34 29 068 beschrieben sind. Als Ketone werden hierbei symmetrische oder unsymmetrische Verbindungen mit aliphatischen, araliphatischen, cyclischen oder aromatischen Kohlenwasserstoffresten mit mindestens einem nichtaromatischen Rest eingesetzt, wobei die Gesamtzahl der Kohlenstoff- und Heteroatome in den Ketonen vorzugsweise 3 bis 12 beträgt. Als aliphatische Reste kommen geradkettige oder verzweigte, ungesättigte und vorzugsweise gesättigte Alkylreste wie z. B. Methyl, Ethyl, Propyl, Isobutyl etc. in Betracht. Araliphatische Reste sind z. B. Benzyl oder Phenethyl und aromatische Reste z. B. α- oder β-Naphthyl und vorzugsweise Phenyl.

Die Ketone können auch einen oder mehrere Substituenten aufweisen, wie z. B. Amino-, Hydroxy-, Alkoxy-, Acetyl- oder Alkoxycarbonylgruppen. Beispiele für Ketone mit gesättigten aliphatischen Resten sind Aceton, Methylethylketon, Methylisobutylketon, für Ketone mit substituierten aliphatischen Resten Methoxyaceton, Diacetonalkohol, Acetessigsäureethylester, für Ketone mit ungesättigten aliphatischen Resten Methylvinylketon, Mesityloxid, Phoron, für Ketone mit araliphatischen Resten Benzylaceton, für Ketone mit cyclischen Resten Cyclohexanon und Cyclopentanon, für Ketone mit aromatischen Resten Acetophenon und 4-Methoxyacetophenon.

Als Aldehyde der Formel R-(CHO)ₙ kommen solche Verbindungen in Frage, in denen n = 1 bis 2 und R = Wasserstoff, ein aliphatischer, araliphatischer, aromatischer oder heterocyclischer Rest ist und wobei die Gesamtzahl der Kohlenstoff- und Heteroatome vorzugsweise einen Wert von 1 bis 11 annimmt. Aliphatische Reste sind insbesondere Alkylreste, vorzugsweise mit 1 bis 6 Kohlenstoffatomen, wie z. B. Methyl, Ethyl, Propyl, Butyl etc. Die aliphatischen Reste können auch verzweigt oder ungesättigt sein (wie z. B. Vinyl). Aromatische Reste sind z. B. α- oder β-Naphthyl, Phenyl und heterocyclische Reste sind z. B. Furfuryl.

Die Aldehyde können auch einen oder mehrere Substituenten aufweisen, wie z. B. Amino-, Hydroxy-, Alkoxy- oder Alkoxycarbonyl-Gruppen und/oder auch die ggf. in den Kondensationsprodukten enthaltenen Säuregruppen. Es können auch Aldehyde mit mehr als einer Aldehydgruppe, nämlich insbesondere Dialdehyde eingesetzt werden. Es ist auch möglich, die niederen gesättigten Aldehyde wie Formaldehyd oder Acetaldehyd in ihrer polymeren Form (Paraformaldehyd oder Paraldehyd) zu verwenden. Beispiele für Aldehyde mit gesättigten aliphatischen Resten sind Formaldehyd (oder Paraformaldehyd), Acetaldehyd (oder Paraldehyd), Butyraldehyd. Beispiele für Aldehyde mit substituierten gesättigten aliphatischen Resten sind Methoxyacetaldehyd, 3-Methoxypropionaldehyd, Acetaldol. Beispiele für Aldehyde mit ungesättigten aliphatischen Resten sind Acrolein, Crotonaldehyd. Beispiele für Aldehyde mit araliphatischen Resten sind Phenylacetaldehyd und Phenylpropionaldehyd. Beispiele für Aldehyde mit aromatischen oder heterocyclischen Resten sind Benzaldehyd, Furfurol, 4-Methoxyfurfurol. Als Dialdehyde können bspw. Glyoxal oder Glutardialdehyd verwendet werden. Besonders bevorzugt als Aldehyd wird Formaldehyd eingesetzt.

Ggf. können die betreffenden Keton-Aldehyd-Kondensations- bzw. Co-Kondensationsprodukte auch noch Säuregruppen enthalten, die vorzugsweise aus Carboxy-, Sulfo-, Sulfamido-, Sulfoxy-, Sulfoalkylamin- oder Sulfoalkyloxy-Gruppen bestehen. Eine Alkylgruppe in diesen Resten besitzt vorzugsweise 1 bis 5 Kohlenstoffatome und ist insbesondere Methyl oder Ethyl. Als Säuregruppen einführende Verbindungen werden vorzugsweise anorganische Säuren wie z. B. Amidosulfonsäure oder deren Salze wie z. B. Natriumsulfit, Natriumbisulfit bzw. Natriumpyrosulfit oder organische Säuren, insbesondere Carbonsäuren wie z. B. Aminoessigsäure verwendet. Die betreffenden Kondensations- oder Co-Kondensationsprodukte können auch zwei oder mehrere verschiedene Säuregruppen enthalten. Das Molverhältnis von Ketonen/Aldehyden/Säuregruppen einführenden Verbindungen kann in weiten Grenzen variiert werden und beträgt in der Regel 1 : 0,5 bis 18 : 0 bis 3. Die Co-Kondensationsprodukte, die beispielsweise in der DE-OS 33 15 152 beschrieben sind, enthalten neben dem Keton, Aldehyd und gegebenenfalls der Säuregruppe noch 2 bis 60 Gew.-%, vorzugsweise 10 bis 40 Gew.-% einer weiteren Komponente, ausgewählt aus der Gruppe Aminoplastbildner und/oder ein Lignin- und/oder Lignitderivat. Als Aminoplastbildner können hierbei alle üblichen, insbesondere die zur Kondensation mit Formaldehyd geeigneten stickstoffhaltigen Verbindungen, eingesetzt werden, insbesondere Harnstoff, Melamin, Dicyandiamid oder ein Guanimin (vorzugsweise Acetoguanamin oder Benzoguanamin).

Die Co-Kondensationskomponenten zum Keton-Aldehyd-Kondensationsprodukt können erfindungsgemäß bevorzugt Aminoplastbildner und/oder aromatische Verbindungen bzw. deren Kondensationsprodukte sein.

Als aromatische Verbindungen sind vorzugsweise die zur Bildung von Phenolharzen geeignete Phenole, also insbesondere Phenol, Cresole oder Xylenole einsetzbar, daneben aber auch reaktive substituierte mehrkernige Aromaten, wie z.B. Naphthalin-Derivate. Die Aminoplastbildner oder aromatische Verbindungen können auch ganz oder teilweise in Form ihrer Vorkondensate oder Kondensationsprodukte verschiedenen Kondensationsgrades verwendet werden. Ebenso sind Aminoplastbildner und aromatische Verbindungen einsetzbar, die Säuregruppen enthalten, wie z.B. Naphthalinsulfonsäuren.

Als Lignitverbindungen können reines Lignit, mit Alkali behandeltes Lignit und/oder sulfoniertes oder sulfoalkyliertes Lignit eingesetzt werden. Unter Ligninverbindungen im Rahmen der vorliegenden Erfindung sind auch Schwarz laugen zu verstehen, die bei der Behandlung von Holz mit Natriumsulfit (Sulfitverfahren) gebildet werden, aber auch Ligninsulfonate bzw. deren Formaldehydharze. Die Lignine oder Lignite können auch in Form ihrer Metallverbindungen (insbesondere Eisen und Chrom) verwendet werden.

Anstelle der Kondensations- und/oder Co-Kondensationsprodukte kann man auch deren ein- oder mehrwertige Metallverbindungen einsetzen, wie sie in der DE-OS 34 29 068 beschrieben sind. Als Metallverbindungen sind vorzugsweise solche mit Metallen der Gruppen II A bis VIII A und/oder der Gruppen I B bis V B (nach der Definition in Kirk-Othmer, Encyclopedia of Chemical Technology, Interscience Publishers New York-London-Sydney, 2. Ausgabe 1965, Vol. 8, Seiten 94 bis 96) geeignet, wobei insbesondere die ein- oder mehrwertigen anorganischen oder organischen Salze dieser Metalle Verwendung finden.

Beispiele für Metallverbindungen sind zwei- oder vierwertige Mangansalze, zweiwertige Nickelsalze, zwei- oder vierwertige Bleisalze, drei- oder sechswertige Chromverbindungen, zwei- oder dreiwertige Eisenverbindungen, dreiwertige Aluminiumverbindungen, ein- und zweiwertige Kupferverbindungen, zweiwertige Magnesiumverbindungen sowie dreiwertige Bismutverbindungen. Der Anteil an Metall in diesen Metallverbindungen liegt bei < 70 Gew.-%, vorzugsweise bei 0,1 bis 20 Gew.-%. Die Herstellung dieser Metallverbindungen wird in der DE-OS 34 29 068 beschrieben.

Es ist als erfindungswesentlich anzusehen, daß an diese betreffenden Keton-Aldehyd-Kondensations- bzw. Co-Kondensationsprodukte bzw. deren Metallverbindungen anionische und/oder nichtionische und/oder kationische ungesättigte Monomere gepfropft worden sind.

Als anionische ungesättigte Monomere werden vorzugsweise Vinylverbindungen mit Carboxy-, Sulfo- oder Phosphorsäuregruppen verwendet. Beispiele für solche ungesättigten Verbindungen mit Carboxysäuregruppen sind Acrylsäure, Methacrylsäure, Maleinsäure, Fumarsäure, Itaconsäure bzw. deren Salze. Beispiele für Vinylverbindungen mit Sulfonsäuregruppen sind Vinylsulfonsäure, Allylsulfonsäure, Methallylsulfonsäure, AMPS, Styrolsulfonsäure und deren Salze. Beispiele für Vinylverbindungen mit Phosphorsäuregruppen sind Vinylphosphonsäure, 2-Acrylamido-2-methylpropanphosphonsäure, Methacryloxyethylphosphat.

An die Stelle der anionischen ungesättigten Monomerverbindungen können auch nichtionische Monomere treten, wobei Vinyl- oder Acrylderivate als bevorzugt anzusehen sind. Hierbei finden vor allem N-Vinylpyrrolidon, Acrylamid, Methacrylamid, N,N-Dimethylacrylamid, Acrolein, Mesityloxid, Allylalkohol, Acrylnitril, Vinylacetat sowie Styrol Anwendung. Weitere Beispiele für solche ungesättigte Verbindungen sind die Ester der oben genannten ungesättigten Säuren.

Schließlich ist es auch möglich, für die Pfropfung kationische ungesättigte Monomere einzusetzen, welche vorzugsweise quaternäre Ammoniumverbindungen darstellen. Beispiele für solche quaternäre Ammoniumverbindungen sind Methacroyloxyethyltrimethylammoniumchlorid (METAC), (Meth)Acrylamidopropyltrimethylammoniumchlorid (MAPTAC), Trimethylallyloxyethylammoniumchlorid (TAAC), Dimethyldiallylammoniumchlorid (DMDAAC).

Das Gewichtsverhältnis von Keton-Aldehyd-Kondensations- bzw. Co-Kondensationsprodukt zu ungesättigtem Monomer kann in weiten Grenzen variiert werden, doch hat es sich als besonders vorteilhaft erwiesen, dieses Verhältnis auf 1 : 0,02 bis 10 einzustellen. Erfindungsgemäß wird die Pfropfreaktion in wäßriger Lösung und vorzugsweise bei einer Temperatur von 0 bis 100°C sowie einem pH-Wert von 1 bis 13 durchgeführt, wobei auf die üblichen radikalischen Starter auf Basis von Redoxsystemen wie z. B. H₂O₂ und Eisen-(II)-salze (wie z. B. Eisen-(II)-sulfat-heptahydrat), Peroxodisulfat/Pyrosulfit oder Sulfit, Cer-(IV)-salze oder auf thermische Starter wie AIBN oder organische bzw. anorganische Peroxide zurückgegriffen wird.

Nach der Durchführung der Pfropfreaktion, die in der Regel nach wenigen Stunden beendet ist, wird vorzugsweise mit den üblichen Basen oder Säuren die Reaktionslösung neutral gestellt. Die dabei entstehende Pfropfpolymerisatlösung weist üblicherweise einen Feststoffgehalt zwischen 5 und 50 Gew.-% auf.

Die erfindungsgemäßen Pfropfpolymere eignen sich je nach Molekulargewicht und Art des eingesetzten ungesättigten Monomers als Dispergiermittel, Retentionsmittel, Verdickungsmittel sowie als Mittel zur Verhinderung des Anquellens von Ton. Als Dispergiermittel kommen in der Regel kurzkettige Keton-Aldehyd-Kondensationsprodukte mit einem Molgewicht < 150 000 und einem hohen Gehalt an Säuregruppen und/oder anionischen Monomeren in Frage. Entscheidend hierbei ist, daß das Pfropfpolymer eine negative Gesamtladung aufweist. Diese Pfropfpolymere eignen sich hervorragend für die Dispergierung von anorganischen Bindemittel-Suspensionen oder -Lösungen, wie z. B. für die Dispergierung von Portlandzement, Gips oder Tiefbohrzementschlämmen. Gleichermaßen gut eignen sich diese Produkte auch für die Dispergierung von Tonsuspensionen und -lösungen, wie sie bspw. in Bohrspülungen als Form von Bentonit-Suspensionen Verwendung finden.

Setzt man die erfindungsgemäßen Pfropfpolymere auf Basis von langkettigen Keton-Aldehyd-Kondensationsprodukten mit einem Molgewicht > 50 000 ein, wobei die Pfropfpolymere anionische, nichtionische oder kationische Ladungen aufweisen, so können diese Produkte bevorzugt als Retentionsmittel für wäßrige Systeme eingesetzt werden. Diese Produkte verhindern im allgemeinen die Abgabe von Wasser aus wasserhaltigen Medien wie z. B. Beton, Mörtel, Zementschlämmen, Gips und Anhydritschlämmen, Tonschlämmen usw.

Die erfindungsgemäßen Pfropfpolymere können auch als Verdickungsmittel, insbesondere für wäßrige Systeme, Verwendung finden, wenn man sehr langkettige Keton-Aldehyd-Kondensationsprodukte mit einem Molgewicht > 75 000 einsetzt und die Pfropfpolymere anionische, nichtionische oder kationische Ladungen aufweisen. Diese Produkte eignen sich sehr gut zur Viskositätserhöhung wäßriger Lösungen oder Suspensionen und können bspw. mit gutem Erfolg bei der Verdickung von Tiefbohrzementschlämmen eingesetzt werden.

Schließlich lassen sich die erfindungsgemäßen Pfropfpolymere auch als Mittel zur Verhinderung des Anquellens von Ton in wäßrigen Systemen einsetzen, wenn man Pfropfpolymere auf Basis von kurz- bis langkettigen Keton-Aldehyd-Kondensationsprodukten mit einem Molgewicht von 500 bis 2 000 000 einsetzt und die Pfropfpolymere kationische oder neutrale Ladungen aufweisen. Diese Produkte verhindern bspw. das Anquellen von Tonen wie z. B. von erbohrten tonhaltigen Festoffen in Bohrspülungen.

Durch Variation des Molgewichts sowie der Art der Ladung ist es im Rahmen der vorliegenden Erfindung auch möglich, Produkte mit kombinierten Eigenschaften herzustellen.

Die nachfolgenden Beispiele sollen die Erfindung näher veranschaulichen. In Tabelle 1 wird ein Überblick über die in den Herstellungsbeispielen verwendeten Ausgangsprodukte gegeben.

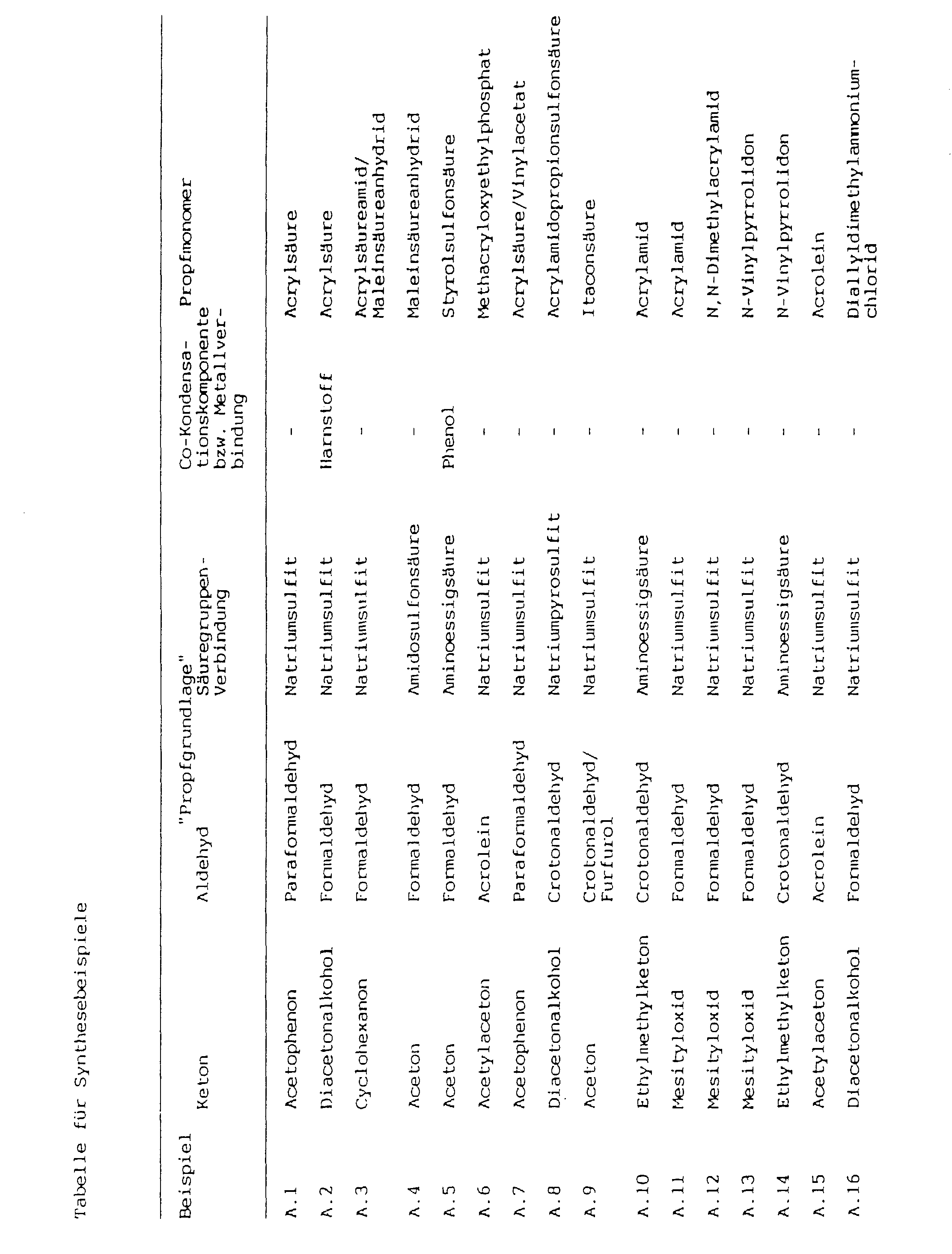

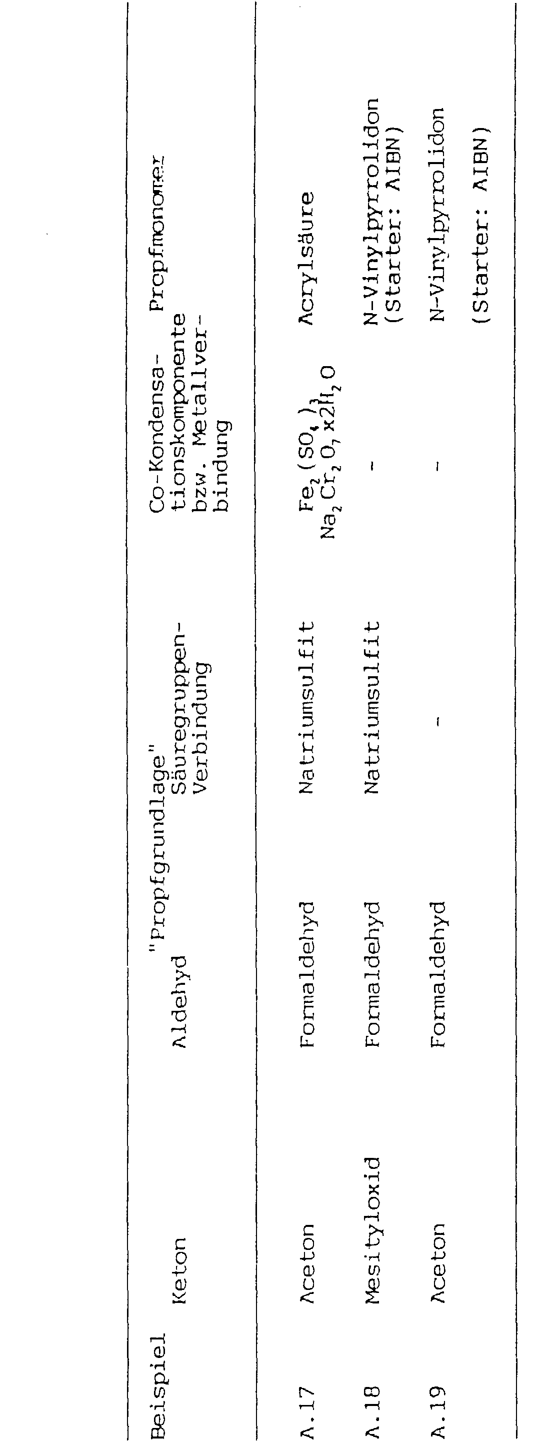

### A. Synthesebeispiele

### Beispiel A.1

In einem Rührbehälter mit Innenthermometer und Rückflußkühler werden in der vorgegebenen Reihenfolge
283,0 Gew.-Teile Wasser,
118,9 Gew.-Teile Natriumsulfit sowie
84,9 Gew.-Teile Paraformaldehyd
vorgelegt und auf 60 °C erwärmt.

Zu dieser Vorlage läßt man langsam und gleichmäßig 113,2 Gew.-Teile Acetophenon zutropfen. Im Anschluß an den Ketoneintrag wird die Lösung noch 2 Stunden bei 90 °C gerührt und nach dem Abkühlen auf Raumtemperatur mit 50 %iger Schwefelsäure auf pH 2 eingestellt.

Die gelbe Reaktionslösung wird auf 60 °C erwärmt und Luft wird aus dem Rührbehälter durch einen stetigen Stickstoffstrom verdrängt.

Im 30 Minutenabstand werden
5,8 Gew.-Teile Eisen-(II)-sulfat Heptahydrat,
45,0 Gew.-Teile Acrylsäure zugegeben und
2,4 Gew.-Teile 30 %ige Wasserstoffperoxidlösung
mittels einer Schlauchpumpe gleichmäßig innerhalb 1 Minute zudosiert. Danach wird die Reaktionslösung noch 2 Stunden bei 60 °C gerührt und nach dem Abkühlen auf Raumtemperatur mit 35 %iger Natronlauge auf neutral gestellt.

Die braune niedrigviskose Pfropfpolymerlösung weist einen Feststoffgehalt von 38 Gew.-% auf.

### Beispiel A.2

In einem Rührbehälter mit Innenthermometer und Rückflußkühler werden in der vorgegebenen Reihenfolge
119,2 Gew.-Teile Wasser,
20,0 Gew.-Teile Natriumsulfit,
7,2 Gew.-Teile Harnstoff und
34,6 Gew.-Teile Diacetonalkohol
vorgelegt und auf 60 °C erwärmt.

Zu dieser Vorlage läßt man langsam und gleichmäßig 119,1 Gew.-Teile 30 %igen Formaldehyd zutropfen, so daß die Temperatur auf 90 °C ansteigt. Es wird bei 90 °C 1,5 Stunden gerührt und bei Bedarf mit Wasser verdünnt.

Nach dem Abkühlen auf Raumtemperatur wird die viskose Lösung mit 50 %iger Schwefelsäure auf pH 2 gestellt und auf 60 °C erwärmt. Luft wird aus dem Rührbehälter durch einen stetigen Stickstoffstrom verdrängt.

Im 30 Minutenabstand werden
18,5 Gew.-Teile Eisen-(II)-sulfat Heptahydrat,
200,0 Gew.-Teile Wasser,
14,4 Gew.-Teile Acrylsäure zugegeben und
7,6 Gew.-Teile 30 %ige Wasserstoffperoxidlösung
mittels einer Schlauchpumpe gleichmäßig innerhalb 1 Minute zudosiert. Danach wird die Reaktionslösung noch 2 Stunden bei 60 °C gerührt und nach dem Abkühlen auf Raumtemperatur mit 35 %iger Natronlauge auf neutral gestellt.

Das braune hochviskose Gel weist einen Feststoffgehalt von 13 Gew.-% auf.

### Beispiel A.3

In einem Rührbehälter mit Innenthermometer und Rückflußkühler werden in der vorgegebenen Reihenfolge nacheinander
200 Gew.-Teile Wasser,
84 Gew.-Teile Natriumsulfit sowie
98 Gew.-Teile Cyclohexanon
vorgelegt und unter intensivem Rühren auf 30 °C erhitzt.

Zu dieser Vorlage läßt man aus einem Vorratsgefäß insgesamt 170 Gew.-Teile Formaldehydlösung (30 %ig) einfließen, wobei die Temperatur bis zum Ende des Formalineintrags auf 90 bis 95 °C ansteigen soll. Im Anschluß an den Formalineintrag wird die Lösung noch 2 Stunden bei 90 bis 95 °C gehalten und nach dem Abkühlen auf 60 °C mit 50 %iger Schwefelsäure auf pH 2 eingestellt.

Die trübe gelbe Reaktionslösung wird auf 60 °C erwärmt und Luft wird aus dem Rührbehälter durch einen stetigen Stickstoffstrom verdrängt.

Im 30 Minutenabstand werden
33,7 Gew.-Teile Eisen-(II)-sulfat Heptahydrat,
15,0 Gew.-Teile Acrylamid und
15,0 Gew.-Teile Maleinsäureanhydrid zugegeben und nach weiteren 30 Minuten
13,7 Gew.-Teile 30 %ige Wasserstoffperoxidlösung
mittels einer Schlauchpumpe gleichmäßig innerhalb 2 Minuten zudosiert. Danach wird die Reaktionslösung noch 2 Stunden bei 60 °C gerührt und nach dem Abkühlen auf Raumtemperatur mit 35 %iger Natronlauge auf pH 7 gestellt.

Die braune niederviskose Pfropfpolymerlösung weist einen Feststoffgehalt von 38 Gew.-% auf.

### Beispiel A.4

In einem Rührbehälter mit Innenthermometer und Rückflußkühler werden in der vorgegebenen Reihenfolge nacheinander
246,6 Gew.-Teile Wasser,
39,9 Gew.-Teile Amidosulfonsäure,
19,3 Gew.-Teile Calciumhydroxid sowie
47,7 Gew.-Teile Aceton
vorgelegt und bis zum Eintreten von Acetonrückfluß erhitzt.

Zu dieser Vorlage läßt man aus einem Vorratsgefäß insgesamt 246,6 Gew.-Teile 30 %ige Formaldehydlösung einfließen, wobei die Temperatur bis zum Ende des Formalineintrags auf 90 °C ansteigen soll. Im Anschluß an den Formalineintrag wird die Lösung noch 24 Stunden bei 90 °C gehalten und nach dem Abkühlen auf Raumtemperatur mit 50 %iger Schwefelsäure auf pH 2 eingestellt. Die orange-farbene Lösung wird auf 60 °C erwärmt und Luft wird aus dem Rührbehälter durch einen stetigen Stickstoffstrom verdrängt.

Im 30 Minutenabstand werden
21,3 Gew.-Teile Eisen-(II)-sulfat Heptahydrat,
22,5 Gew.-Teile Maleinsäureanhydrid zugegeben und nach weiteren 30 Minuten
8,7 Gew.-Teile 30 %ige Wasserstoffperoxidlösung
mittels einer Schlauchpumpe innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die rotbraune niederviskose Pfropfpolymerlösung weist einen Feststoffgehalt von 23 Gew.-% auf.

### Beispiel A.5

In einem Rührbehälter mit Innenthermometer und Rückflußkühler werden in der vorgegebenen Reihenfolge
161,3 Gew.-Teile Wasser,
36,9 Gew.-Teile festes Natriumhydroxid,
34,6 Gew.-Teile Aminoessigsäure,
43,4 Gew.-Teile Phenol sowie
26,8 Gew.-Teile Aceton
vorgelegt und bis zum Eintreten von Acetonrückfluß erhitzt.

Zu dieser Vorlage läßt man aus einem Vorratsgefäß insgesamt 138,3 Gew.-Teile 30 %ige Formaldehydlösung einfließen, wobei die Temperatur bis zum Ende des Formalineintrags auf 95 °C ansteigen soll. Im Anschluß an den Formalineintrag wird die Lösung noch 1 Stunde bei 95 °C gehalten und nach dem Abkühlen auf Raumtemperatur mit 50 %iger Schwefelsäure auf pH 2 eingestellt. Die orange-rote Reaktionslösung wird auf 60 °C erwärmt und Luft wird aus dem Rührbehälter durch einen stetigen Stickstoffstrom verdrängt.

Im 30 Minutenabstand werden
26,0 Gew.-Teile Eisen-(II)-sulfat Heptahydrat,
60,0 Gew.-Teile Styrolsulfonsäure zugegeben und nach weiteren 30 Minuten
11,0 Gew.-Teile 30 %ige Wasserstoffperoxidlösung
mittels einer Schlauchpumpe innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die dunkelbraune niedrigviskose Pfropfpolymerlösung weist einen Feststoffgehalt von 34 Gew.-% auf.

### Beispiel A.6

In einem Rührbehälter mit Innenthermometer und Rückflußkühler werden in der vorgegebenen Reihenfolge nacheinander
344,3 Gew.-Teile Wasser,
49,2 Gew.-Teile Acetylaceton sowie
123,9 Gew.-Teile Natriumsulfit
vorgelegt und auf 60 °C Innentemperatur erwärmt.

Zu dieser Lösung werden insgesamt 82,6 g Acrolein zugetropft. Wegen der stark exothermen Reaktion verfährt man bei der Acroleinzugabe so, daß man das erste Zehntel langsam und gleichmäßig zugibt und dann das Anspringen der Reaktion abwartet, was sich durch beginnende Gelbfärbung der Vorlage und verstärkten Acetonrückfluß abzeichnet. Unter Kühlung werden die restlichen 90 % Acrolein zugetropft. Anschließend wird 4 Stunden bei 90 °C gerührt, wobei sich die Reaktionslösung tiefrot färbt.

Nach dem Abkühlen auf Raumtemperatur wird mit 50 %iger Schwefelsäure auf pH 2 eingestellt, auf 60 °C erwärmt und die Luft aus dem Reaktionsbehälter durch einen stetigen Stickstoffstrom verdrängt.

Im 30 Minutenabstand werden
13,2 Gew.-Teile Eisen-(II)-sulfat Heptahydrat,
30,0 Gew.-Teile Methacryloxyethylphosphat zugegeben und nach weiteren 30 Minuten
5,4 Gew.-Teile 30 %ige Wasserstoffperoxidlösung
mittels einer Schlauchpumpe gleichmäßig kontinuierlich innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die ockerfarbene Pfropfpolymerlösung weist einen Feststoffgehalt von 39 Gew.-% auf.

### Beispiel A.7

In einem Rührbehälter mit Innenthermometer und Rückflußkühler werden in der vorgegebenen Reihenfolge nacheinander
283,0 Gew.-Teile Wasser,
118,9 Gew.-Teile Natriumsulfit sowie
84,9 Gew.-Teile Paraformaldehyd
vorgelegt und auf 60 °C erwärmt.

Zu dieser Lösung werden 113,2 Gew.-Teile Acetophenon langsam und gleichmäßig zugetropft, so daß die Innentemperatur 70 °C nicht übersteigt. Nach beendeter Ketonzugabe wird 2 Stunden bei 90 °C nachgerührt.

Nach dem Abkühlen auf Raumtemperatur wird mit 50 %iger Schwefelsäure auf pH 2 eingestellt, die Reaktionslösung auf 60 °C erwärmt und die Luft aus dem Reaktionsbehälter durch einen stetigen Stickstoffstrom verdrängt.

Im 30 Minutenabstand werden
57,4 Gew.-Teile Eisen-(II)-sulfat Heptahydrat,
15,0/30,0 Gew.-Teile Vinylacetat und Acrylsäure zugegeben und nach weiteren 30 Minuten
22,4 Gew.-Teile 30 %ige Wasserstoffperoxidlösung
mittels einer Schlauchpumpe gleichmäßig innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die braune Lösung weist einen Feststoffgehalt von 38 Gew.-% auf.

### Beispiel A.8

In einem Rührbehälter mit Innenthermometer und Rückflußkühler werden in der vorgegebenen Reihenfolge
280,0 Gew.-Teile Wasser,
22,2 Gew.-Teile Natriumpyrosulfit sowie
27,2 Gew.-Teile Diacetonalkohol
vorgelegt und auf 70 °C erwärmt.

Zu der erwärmten Vorlage werden 12,0 Gew.-Teile Ätznatron und 10,0 Gew.-Teile Crotonaldehyd zugegeben. Weitere 88,0 Gew.-Teile Crotonaldehyd werden unter Kühlen so zugegeben, daß die Innentemperatur 70 °C nicht übersteigt. Es wird 30 Minuten bei 90 °C nachgerührt, auf Raumtemperatur gekühlt und mit 50 %iger Schwefelsäure der pH auf 2 gestellt.

Die tiefrote Reaktionslösung wird auf 60 °C erwärmt und Luft aus dem Rührbehälter durch einen stetigen Stickstoffstrom verdrängt.

Im 30 Minutenabstand werden
13,6 Gew.-Teile Eisen-(II)-sulfat Heptahydrat,
30,0 Gew.-Teile Acrylamidopropionsulfonsäure zugegeben und
5,6 Gew.-Teile 30 %ige Wasserstoffperoxidlösung
mittels einer Schlauchpumpe innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die braune niedrigviskose Pfropfpolymerlösung weist einen Feststoffgehalt von 34 Gew.-% auf.

### Beispiel A.9

In einem Rührbehälter mit Innenthermometer und Rückflußkühler werden in der vorgegebenen Reihenfolge
405,9 Gew.-Teile Wasser,
42,6 Gew.-Teile Natriumsulfit sowie
39,2 Gew.-Teile Aceton
vorgelegt und auf 56 °C erwärmt.

Zu der Vorlage wird eine Mischung aus 64,9 Gew.-Teilen Furfurol und 47,4 Gew.-Teilen Crotonaldehyd zugetropft, wobei die Innentemperatur durch Kühlen auf 70 °C gehalten wird. Nach erfolgter Aldehydzugabe wird 4 Stunden bei 90 °C gerührt, auf Raumtemperatur gekühlt und mit 50 %iger Schwefelsäure der pH-Wert auf 2 gestellt.

Die Reaktionslösung wird auf 60 °C erwärmt und Luft aus dem Rührbehälter durch einen stetigen Stickstoffstrom verdrängt.

Im 30 Minutenabstand werden
26,8 Gew.-Teile Eisen-(II)-sulfat Heptahydrat,
125,0 Gew.-Teile Wasser,
37,5 Gew.-Teile Itaconsäure zugegeben und
10,9 Gew.-Teile 30 %ige Wasserstoffperoxidlösung
mittels einer Schlauchpumpe gleichmäßig innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die braune Pfropfpolymerlösung weist einen Feststoffgehalt von 27 Gew.-% auf.

### Beispiel A.10

In einem Rührbehälter mit Innenthermometer und Rückflußkühler werden in der vorgegebenen Reihenfolge
346,3 Gew.-Teile Wasser,
75,7 Gew.-Teile Crotonaldehyd,
38,9 Gew.-Teile Methylethylketon und
5,4 Gew.-Teile Kaliumcarbonat
vorgelegt und 5 Stunden bei 85 °C gerührt.

Zu der orangefarbenen Lösung werden
52,5 Gew.-Teile Aminoessigsäure,
43,3 Gew.-Teile Wasser zugegeben und
37,9 Gew.-Teile Crotonaldehyd so zugegeben,

daß die Temperatur auf 90 °C ansteigt. Man läßt 2 Stunden bei 90 °C nachrühren, kühlt auf 20 °C, stellt mit 50 %iger Schwefelsäure auf pH 2 und verdrängt Luft aus dem Rührbehälter durch einen stetigen Stickstoffstrom.

Im 30 Minutenabstand werden
156,4 Gew.-Teile Eisen-(II)-sulfat Heptahydrat,
120,0 Gew.-Teile Acrylamid zugegeben und
64,0 Gew.-Teile 30 %ige Wasserstoffperoxidlösung
mittels einer Schlauchpumpe gleichmäßig innerhalb 5 Minuten zudosiert.

Die Reaktionslösung wird 2 Stunden bei 60 °C gerührt und nach dem Abkühlen auf Raumtemperatur mit 35 %iger Natronlauge auf neutral gestellt.

Die braune Pfropfpolymerlösung weist einen Feststoffgehalt von 31 Gew.-% auf.

### Beispiel A.11

In einem Rührbehälter mit Innenthermometer und Rückflußkühler werden in der vorgegebenen Reihenfolge nacheinander
17,6 Gew.-Teile Wasser,
43,1 Gew.-Teile Mesityloxid sowie
72,1 Gew.-Teile Natriumsulfit
vorgelegt und auf 90 °C erhitzt.

Zu dieser Vorlage läßt man aus einem Vorratsgefäß insgesamt 176,0 Gew.-Teile 30 %ige Formaldehydlösung einfließen, wobei die Temperatur bis zum Ende des Formalineintrags durch Kühlen zwischen 90 und 95 °C gehalten wird. Im Anschluß an den Formalineintrag wird die Lösung noch 1 Stunde bei 90 bis 95 °C gehalten. Um die Reaktionslösung rührfähig zu halten, wird sie nach Bedarf mit Wasser verdünnt.

Nach dem Abkühlen auf Raumtemperatur wird mit 50 %iger Schwefelsäure der pH-Wert auf 2 gestellt. Die tiefrote Reaktionslösung wird auf 60 °C erwärmt und Luft wird aus dem Rührbehälter durch einen stetigen Stickstoffstrom verdrängt.

Im 30 Minutenabstand werden
73,0 Gew.-Teile Eisen-(II)-sulfat Heptahydrat,
186,6 Gew.-Teile Acrylamid zugegeben und nach weiteren 30 Minuten
29,8 Gew.-Teile 30 %ige Wasserstoffperoxidlösung
mittels einer Schlauchpumpe innerhalb 10 Minuten unter Kühlung zudosiert.

Danach wird die Reaktionslösung noch 2 Stunden bei 60 °C gerührt und nach dem Abkühlen auf Raumtemperatur mit 35 %iger Natronlauge auf neutral gestellt.

Die braune Pfropfpolymerlösung weist einen Feststoffgehalt von 21 Gew.-% auf.

### Beispiel A.12

In einem Rührbehälter mit Innenthermometer und Rückflußkühler werden in der vorgegebenen Reihenfolge nacheinander
4,6 Gew.-Teile Wasser,
11,2 Gew.-Teile Mesityloxid sowie
18,7 Gew.-Teile Natriumsulfit
vorgelegt und auf 90 °C erhitzt.

Zu dieser Vorlage läßt man aus einem Vorratsgefäß insgesamt 45,7 Gew.-Teile 30 %ige Formaldehydlösung einfließen, wobei die Temperatur bis zum Ende des Formalineintrags durch Kühlen zwischen 90 und 95 °C gehalten wird. Im Anschluß an den Formalineintrag wird die Lösung noch 1 Stunde bei 90 bis 95 °C gehalten. Um die Reaktionslösung rührfähig zu halten und um auf einen Feststoffgehalt von ca. 5 % abzudünnen, werden sukzessive 637 Gew.-Teile Wasser zugegeben.

Nach dem Abkühlen auf Raumtemperatur wird mit 50 %iger Schwefelsäure der pH-Wert auf 2 gestellt. Die tiefrote Reaktionslösung wird auf 60 °C erwärmt und Luft wird aus dem Rührbehälter durch einen stetigen Stickstoffstrom verdrängt.

Im 30 Minutenabstand werden
0,10 Gew.-Teile Eisen-(II)-sulfat Heptahydrat,
36,0 Gew.-Teile N,N-Dimethylacrylamid zugegeben und nach weiteren 30 Minuten
4,1 Gew.-Teile 0,3 %ige Wasserstoffperoxidlösung
mittels einer Schlauchpumpe innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die rote Pfropfpolymerlösung weist einen Feststoffgehalt von 7 Gew.-% auf.

### Beispiel A.13

In einem Rührbehälter mit Innenthermometer und Rückflußkühler werden in der vorgegebenen Reihenfolge nacheinander
35,2 Gew.-Teile Wasser,
86,2 Gew.-Teile Mesityloxid sowie
144,1 Gew.-Teile Natriumsulfit
vorgelegt und auf 90 °C erhitzt.

Zu dieser Vorlage läßt man aus einem Vorratsgefäß insgesamt 352,0 Gew.-Teile 30 %ige Formaldehydlösung einfließen, wobei die Temperatur bis zum Ende des Formalineintrags durch Kühlen zwischen 90 und 95 °C gehalten wird. Im Anschluß an den Formalineintrag wird die Lösung noch 1 Stunde bei 90 bis 95 °C gehalten. Um die Reaktionslösung rührfähig zu halten, wird sie nach Bedarf mit Wasser verdünnt.

Nach dem Abkühlen auf Raumtemperatur wird mit 50 %iger Schwefelsäure der pH-Wert auf 2 gestellt. Die tiefrote Reaktionslösung wird auf 60 °C erwärmt und Luft wird aus dem Rührbehälter durch einen stetigen Stickstoffstrom verdrängt.

Im 30 Minutenabstand werden
75,0 Gew.-Teile Eisen-(II)-sulfat Heptahydrat,
90,0 Gew.-Teile N-Vinyl-2-pyrrolidon zugegeben und nach weiteren 30 Minuten
30,6 Gew.-Teile 30 %ige Wasserstoffperoxidlösung
mittels einer Schlauchpumpe innerhalb 2 Minuten zudosiert.

Danach wird die Reaktionslösung noch 2 Stunden bei 60 °C gerührt und nach dem Abkühlen auf Raumtemperatur mit 35 %iger Natronlauge auf neutral gestellt.

Die braune Pfropfpolymerlösung weist einen Feststoffgehalt von 40 Gew.-% auf.

### Beispiel A.14

In einem Rührbehälter mit Innenthermometer und Rückflußkühler werden in der vorgegebenen Reihenfolge
346,3 Gew.-Teile Wasser,
75,7 Gew.-Teile Crotonaldehyd,
38,9 Gew.-Teile Methylethylketon sowie
5,4 Gew.-Teile Kaliumcarbonat
vorgelegt und 5 Stunden bei 80 °C gerührt.

Anschließend werden bei 80 °C
43,3 Gew.-Teile Wasser,
52,5 Gew.-Teile Aminoessigsäure zugegeben und
37,9 Gew.-Teile Crotonaldehyd so zugegeben,
daß die Temperatur auf 90 °C ansteigt.

Die Reaktionslösung wird 2 Stunden bei 90 °C gerührt und nach dem Abkühlen auf Raumtemperatur mit 50 %iger Schwefelsäure auf pH 2 eingestellt. Die Reaktionslösung wird auf 60 °C erwärmt und Luft wird aus dem Rührbehälter durch einen stetigen Stickstoffstrom verdrängt.

Im 30 Minutenabstand werden
18,1 Gew.-Teile Eisen-(II)-sulfat Heptahydrat,
266,7 Gew.-Teile N-Vinylpyrrolidon zugegeben und
7,5 Gew.-Teile 30 %ige Wasserstoffperoxidlösung
mittels einer Schlauchpumpe gleichmäßig innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die braune Suspension weist einen Feststoffgehalt von 27 Gew.-% auf.

### Beispiel A.15

In einem Rührbehälter mit Innenthermometer und Rückflußkühler werden in der vorgegebenen Reihenfolge
344,3 Gew.-Teile Wasser,
123,9 Gew.-Teile Natriumsulfit,
49,2 Gew.-Teile Acetylaceton
vorgelegt und auf 60 °C erhitzt.

Zu dieser Vorlage läßt man 82,6 g Acrolein zutropfen, so daß die Temperatur 70 °C nicht übersteigt. Nach erfolgter Aldehydzugabe wird die Lösung noch 4 Stunden bei 90 °C gerührt und nach dem Abkühlen auf Raumtemperatur mit 50 %iger Schwefelsäure auf pH 2 eingestellt.

Die tiefrote Reaktionslösung wird auf 60 °C erwärmt und Luft wird aus dem Rührbehälter durch einen stetigen Stickstoffstrom verdrängt.

Im 30 Minutenabstand werden
37,7 Gew.-Teile Eisen-(II)-sulfat Heptahydrat,
45,6 Gew.-Teile Acrolein zugegeben und
15,4 Gew.-Teile 30 %ige Wasserstoffperoxidlösung
mittels einer Schlauchpumpe gleichmäßig innerhalb 1 Minute zudosiert.

Danach wird die Reaktionslösung noch 2 Stunden bei 60 °C gerührt und nach dem Abkühlen auf Raumtemperatur mit 35 %iger Natronlauge auf neutral gestellt.

Die dunkelbraune, mittelviskose Pfropfpolymerlösung weist einen Feststoffgehalt von 40 Gew.-% auf.

### Beispiel A.16

Im Rührbehälter werden entsprechend Beispiel 1 nacheinander
63,3 Gew.-Teile Wasser,
63,3 Gew.-Teile Formaldehydlösung 30 %ig,
52,4 Gew.-Teile Diacetonalkohol und
4,5 Gew.-Teile Kaliumcarbonat
vorgelegt und bei 30 °C Innentemperatur 8 Stunden gerührt.

Zu der gelben Lösung werden 28,5 Gew.-Teile Natriumsulfit gegeben und auf 60 °C erhitzt, wobei die Lösung rot wird. Es werden 72,1 Gew.-Teile 30 %ige Formaldehydlösung aus einem Vorratsgefäß so zugetropft, daß die Temperatur der Reaktionslösung auf 90 °C ansteigt. Im Anschluß an den Formalineintrag wird die Lösung noch 1 Stunde bei 90 °C gehalten. Um die Lösung rührfähig zu halten, wird nach Bedarf mit Wasser verdünnt. Die viskose Lösung weist einen Feststoffgehalt von 14,1 Gew.-% auf.

Nach dem Abkühlen auf Raumtemperatur wird mit 50 %iger Schwefelsäure der pH auf 2 gestellt. Die tiefrote Reaktionslösung wird auf 60 °C erwärmt und Luft wird aus dem Rührbehälter durch einen stetigen Stickstoffstrom verdrängt.

Im 30 Minutenabstand werden zugegeben:
0,93 Gew.-Teile Eisen-(II)-sulfat Heptahydrat,
90,0 Gew.-Teile Diallyl-Dimethylammoniumchlorid und nach weiteren 30 Minuten
3,8 Gew.-Teile 3 %ige Wasserstoffperoxidlösung
mittels einer Pipette gleichmäßig innerhalb 10 Sekunden zudosiert.

Danach wird die Reaktionslösung noch 2 Stunden bei 60 °C gerührt und nach dem Abkühlen auf Raumtemperatur mit 35 %iger Natronlauge auf neutral gestellt.

Die rote viskose Pfropfpolymerlösung weist einen Feststoffgehalt von 18 Gew.-% auf.

### Beispiel A.17

In einem Rührbehälter mit Innenthermometer und Rückflußkühler werden in der vorgegebenen Reihenfolge
129,1 Gew.-Teile Wasser,
54,2 Gew.-Teile Natriumsulfit,
39,9 Gew.-Teile Aceton
vorgelegt und auf 56 °C erwärmt.

Sobald der Acetonrückfluß einsetzt, werden insgesamt 258,2 Gew.-Teile 30 %ige Formaldehydlösung zugetropft. Wegen der stark exothermen Reaktion wird das erste Zehntel der Formalinlösung langsam und gleichmäßig zugegeben. Nach Anspringen der Reaktion, was sich durch beginnende Gelbfärbung der Vorlage und verstärkten Acetonrückfluß äußert, wird das restliche Formalin zugegeben, wobei man die Temperatur des Ansatzes zum Siedepunkt ansteigen läßt. Im Anschluß an die Formaldehydzugabe führt man noch eine 30 Minuten dauernde thermische Nachbehandlung des Ansatzes bei 95 °C durch.

Nach Abkühlen auf Raumtemperatur wird der pH der Lösung mit Essigsäure auf 4 gestellt.

Zu der 29 %igen Harzlösung werden 68,6 Gew.-Teile einer 40 %igen wäßrigen Eisen-(III)-sulfat-Lösung gegeben und der Ansatz 2 Stunden bei Raumtemperatur gerührt, wobei sich der pH auf 8 erhöht.

Zur Darstellung der Eisen-Chrom-Verbindung setzt man der Lösung der Eisenverbindung 50,0 Gew.-Teile einer 40 %igen wäßrigen Lösung von Natriumdichromat-Dihydrat zu und rührt erneut 2 Stunden bei Raumtemperatur. Die Zugaben an Eisen- bzw. Chromsalz entsprechen einer Menge von ca. 5 % Eisen bzw. Chrom, bezogen auf eingesetztes Harz. Die erhaltene braungefärbte Lösung der Eisen-Chrom-Verbindung weist einen Feststoffgehalt von 29 % auf. Ihre Brookfield-Viskosität beträgt bei Raumtemperatur 17 mPas. Der pH-Wert der braunen Harzlösung wird mit 50 %iger Schwefelsäure auf 2 erniedrigt. Die Lösung wird auf 60 °C erwärmt und Luft aus dem Rührbehälter durch einen stetigen Stickstoffstrom verdrängt.

Im 30 Minutenabstand werden
33,7 Gew.-Teile Eisen-(II)-sulfat Heptahydrat,
87,3 Gew.-Teile Acrylsäure zugegeben und
13,7 Gew.-Teile 30 %ige Wasserstoffperoxidlösung
mittels einer Schlauchpumpe gleichmäßig innerhalb 2 Minuten zudosiert. Bei der Zugabe des Wasserstoffperoxids wird die Reaktionslösung hochviskos.

Die Reaktionslösung wird 2 Stunden bei 60 °C gerührt, mit 200 g Wasser verdünnt und nach dem Abkühlen auf Raumtemperatur mit 35 %iger Natronlauge neutralisiert, wodurch die Viskosität der Lösung wieder abfällt.

Das braune Pfropfpolymer weist einen Feststoffgehalt von 30 Gew.-% auf.

### Beispiel A.18

In einem Rührbehälter mit Innenthermometer und Rückflußkühler werden in der vorgegebenen Reihenfolge
35,2 Gew.-Teile Wasser,
86,2 Gew.-Teile Mesityloxid und
144,2 Gew.-Teile Natriumsulfit
vorgelegt und auf 90 °C erwärmt.

Anschließend werden 352,0 Gew.-Teile 30 %ige Formaldehydlösung gleichmäßig in 10 Minuten unter Kühlen zugetropft. Im Anschluß an die Formaldehydzugabe wird die Lösung noch 1 Stunde bei 90 °C gerührt. Nach Abstumpfen der Lösung auf pH 10 mit 50 %iger Schwefelsäure wird auf Rückfluß erhitzt und Luft aus dem Reaktionsgefäß durch 30 minütiges Durchleiten von Stickstoff durch die Lösung verdrängt.

Zu der siedenden Vorlage wird eine Lösung aus
2,8 Gew.-Teile 2,2'-Azobis-(2-methyl-propionsäurenitril)
   (AIBN)
180,0 Gew.-Teile N-Vinylpyrrolidon
mittels einer Schlauchpumpe gleichmäßig innerhalb 20 Minuten zudosiert.

Die Lösung wird 3 Stunden bei Siedetemperatur gerührt, wobei die Viskosität ansteigt. Nach Abkühlen des Propfpolymers auf Raumtemperatur wird mit 50 %iger Schwefelsäure auf pH 7 neutralisiert.

Die rote hochviskose Polymerisatlösung weist einen Feststoffgehalt von 49 Gew.-% auf.

### Beispiel A.19

Ein Aldolkondensat ohne Säurefunktion wird analog Vorschrift nach Houben-Weyl, Band 14/II, 1963, S. 442, Beispiel 3 (a) dargestellt.

In einem Becherglas werden in der vorgegebenen Reihenfolge
696 Gew.-Teile Aceton,
2178 Gew.-Teile 30 %ige Formaldehydlösung,
20 Gew.-Teile Kaliumcarbonat gelöst in
35 Gew.-Teilen Wasser
vorgelegt.

Die klare Lösung erwärmt sich innerhalb 45 Minuten bis zum Sieden. Man läßt 26 Stunden stehen und neutralisiert dann mit konzentrierter Salzsäure. Die farblose Lösung wird anschließend am Rotationsverdampfer von 17 % Feststoff auf ca. 40 % eingeengt, um restliches Aceton und Formaldehyd zu entfernen.

Die erhaltene voll wasserlösliche Harzlösung ist farblos und weist eine Brookfield-Viskosität von 150 mPas bei einem Feststoffgehalt von 41,4 % auf.

In einem Rührbehälter mit Innenthermometer und Rückflußkühler werden 500 Gew.-Teile 20 %ige Aldolkondensatlösung, die nach obiger Vorschrift hergestellt wurde, vorgelegt, mit 50 %iger Schwefelsäure auf pH 7 eingestellt und auf 90 °C erwärmt. Luft wird aus dem Rührbehälter durch einen stetigen Stickstoffstrom verdrängt.

Zu der Vorlage wird eine Lösung aus
2,9 Gew.-Teile 2,2'-Azobis-(2-methyl-propionsäurenitril)
   (AIBN)
   und
100,0 Gew.-Teile N-Vinylpyrrolidon
mittels einer Schlauchpumpe gleichmäßig innerhalb 20 Minuten zudosiert.

Die Lösung wird 3 Stunden bei 90 °C gerührt und bei Bedarf mit Wasser verdünnt.

Die gelbe hochviskose Polymerisatlösung weist einen Feststoffgehalt von 19 Gew.-% auf.

### B. Anwendungsbeispiele

### B.1 Dispergierung von Portlandzement

Ein nach den Beispielen A.3 bzw. A.13 hergestelltes Pfropfpolymer erhöht bei einer Dosierung von 0,5 Gew.-% bezogen auf den Zementgehalt das Ausbreitmaß von Portlandzement der Klasse 35 F (w/z = 0,48) um 50 % bzw. 40 % bei Raumtemperatur.

### B.2 Dispergierung von β-Halbhydratgips

Ein nach den Beispielen A.3 bzw. A.13 hergestelltes Pfropfpolymer erhöht bei einer Dosierung von 1 Gew.-% bezogen auf die Gipsmenge (302 g β-Halbhydratgips, 90 g Wasser, 3 g Pfropfpolymer) das Ausbreitmaß um 150 % bzw. 100 % bei Raumtemperatur. Die Pfropfgrundlage (Cyclohexanon/Formaldehyd/Natriumsulfit) zu Beispiel A.3 erhöht dagegen das Ausbreitmaß des Gipses lediglich um 60 %.

### B.3 Dispergierung von Tiefbohrzementschlämmen

Die Dispergierwirkung erfindungsgemäßer Pfropfpolymere an Tiefbohrzementschlämmen ist in Tabelle 2 dargestellt.

Die Dosierung an Pfropfpolymeren beträgt 1,0 Gew.-% bezogen auf den Zementgehalt. Die Zementschlämmen, bestehend aus Class H-Zement und Wasser (w/z = 0,38) sind nach den Standardbedingungen von API RP 10 B hergestellt und wurden mit einem Fann 35 SA-Viskosimeter bei 38 °C bei vier verschiedenen Schergradienten vermessen.

**Tabelle 2:**

| Abnahme der Viskosität um x % bei vier verschiedenen Schergradienten | | | | |
|---|---|---|---|---|
| Herstellungsbeispiel | prozentuale Absenkung der Fann Viskosität bei Upm | | | |
| | 600 | 300 | 200 | 100 |
| reine Zementschlämme | 0 | 0 | 0 | 0 |
| A.3 | -63 | -80 | -85 | -91 |
| A.6 | -49 | -65 | -69 | -72 |
| A.13 | -69 | -83 | -88 | -93 |

### B.4 Dispergierung von Bentonitsuspensionen

Bentonit findet als Zusatzmittel u. a. zur Verbesserung des Austrags von Bohrklein in Bohrspülungen Anwendung. Dabei muß jedoch die Bohrspülung pumpbar bleiben, d. h. der Viskositätsaufbau durch erbohrte Tone muß gelegentlich durch viskositätssenkende Zusatzmittel kontrolliert werden. Die viskositätssenkende Wirkung erfindungsgemäßer Pfropfpolymere an 8 Gew.-%iger Bentonitsuspension ist in Tabelle 3 dargestellt. Die Vermessung der Rheologie wurde bei Raumtemperatur mit einem Fann 35 SA-Viskosimeter durchgeführt.

**Tabelle 3:**

| Abnahme (-) bzw. Zunahme (+) der Viskosität einer 8 Gew.-%igen Bentonitsuspension nach Zusatz von 3 Gew.-% Pfropfpolymer bzw. Pfropfgrundlage | | | | | | |
|---|---|---|---|---|---|---|
| Herstellungsbeispiele | prozentuale Abnahme (-) bzw. Zunahme (+) der Fann Viskosität bei Upm | | | | | |
| | 600 | 300 | 200 | 100 | 6 | 3 |
| 8 Gew.-%ige | 0 | 0 | 0 | 0 | 0 | 0 |
| Bentonitsuspension | | | | | | |
| A.1 | -54 | -78 | -82 | -85 | -90 | -90 |
| Pfropfgrundlage A.1 | +18 | +15 | +19 | +17 | +6 | +4 |
| A.5 | -47 | -67 | -69 | -75 | -83 | -83 |
| A.7 | -51 | -56 | -58 | -58 | -58 | -58 |
| Pfropfgrundlage A.7 | +18 | +15 | +19 | +17 | +6 | +4 |
| A.10 | -33 | -35 | -38 | -40 | -42 | -42 |

### B.5 Verdickungsmittel für Tiefbohrzementschlämme

Dosiert man 1,0 Gew.-% bezogen auf den Zementgehalt eines Pfropfpolymers, hergestellt nach A.4, zu einer Class H-Zement-Wasserschlämme (w/z = 0,38), die nach den Standardbedingungen von API SPEC 10 hergestellt wird, so ist folgende viskositätssteigernde Wirkung meßbar.

**Tabelle 4:**

| Erhöhung der Viskosität um x % bei vier verschiedenen Schergradienten (38 °C) | | | | |
|---|---|---|---|---|
| Herstellungsbeispiel | prozentuale Zunahme der Fann Viskosität bei Upm | | | |
| | 600 | 300 | 200 | 100 |
| Zementschlämme | 0 | 0 | 0 | 0 |
| A.4 | +21 | +23 | +24 | +37 |
| Pfropfgrundlage von A.4 | -26 | -45 | -50 | -54 |

### B.6 Verdickungsmittel für Bentonitsuspensionen

Dosiert man 3,0 Gew.-% Pfropfpolymer, hergestellt nach A.13, zu einer 8 Gew.-%igen Bentonitsuspension, so ist folgende viskositätssteigernde Wirkung meßbar.

**Tabelle 5:**

| Erhöhung der Viskosität um x % einer 8 Gew.-%igen Bentonitsuspension | | | | | | |
|---|---|---|---|---|---|---|
| Herstellungsbeispiel | prozentuale Zunahme der Fann Viskosität bei Upm | | | | | |
| | 600 | 300 | 200 | 100 | 6 | 3 |
| A.13 | +38 | +38 | +37 | +31 | +24 | +24 |

### B.7 Fließbeton

Nach den Beispielen A.3, A.6 und A.13 hergestellte Pfropfpolymere eignen sich zur Herstellung von Fließbeton nach den "Richtlinien für die Herstellung und Verarbeitung von Fließbeton" in der Fassung vom Mai 1974, wie sie z. B. in der Zeitschrift "Beton" 24 (1974) auf den Seiten 342 bis 344 zitiert sind.

**Tabelle 6:**

| Erhöhung des Betonausbreitmaßes um x % bei 0,4 Gew.-% Dosierung (bezogen auf den Zementgehalt) | |
|---|---|
| Beispiel | prozentuale Zunahme des Ausbreitmaßes |
| A.3 | 35 |
| A.6 | 31 |
| A.13 | 33 |

### B.8 Gasbetonverklebung mit Mörtel oder Zementleim

Nach dem Beispiel A.2 hergestelltes Pfropfpolymer kann zur Bereitung von Mörtel oder Zementleim mit hohem Wasserrückhaltevermögen, wie z. B. für Gasbetonverklebungen, verwendet werden.

Der Gasbeton ist durch den Zementleim so fest verklebt, daß nach 24 Stunden kein Bruch in der Fuge auftritt.

### B.9 Quellinhibierung von Tonen

Erfindungsgemäße kationische Pfropfpolymere verhindern das Anquellen von Tonen. Gibt man z. B. tonhaltiges Bohrklein aus Erdölbohrungen in eine 2 Gew.-%ige wäßrige Lösung des Pfropfpolymers entsprechend Beispiel A.16, so bleiben die Stücke des Bohrkleins intakt. Es tritt kein Zerfall oder eine Volumenzunahme ein. In Wasser, ohne dem erfindungsgemäßen Pfropfpolymer, quillt das stückige Bohrklein an. Die einzelnen Partikel verkleben dabei zu einem Klumpen, der ein mehrfaches des ursprünglichen Eigenvolumens annimmt und schließlich in feine Tonteilchen zerfällt.

### B.10 Retentionsmittel Bentonitsuspension

Der Filtratwasserverlust einer 8 Gew.-%igen Bentonitsuspension, der nach den Standardbedingungen von API 13 B-1 (25 °C, 0,7 MPa, 30 Minuten) bestimmt wird, kann durch Zugabe von 3 Gew.-% Pfropfpolymer erniedrigt werden.

**Tabelle 6:**

| Erniedrigung des API-Filtratwasserverlustes einer 8 Gew.-%igen Bentonitsuspension | |
|---|---|
| Herstellungsbeispiel | Reduktion des Filtratwasserverlustes um % |
| A.9 | -41 |
| A.13 | -33 |

## Patentansprüche

1. Pfropfpolymere von Keton-Aldehyd-Kondensations- bzw. Co-Kondensationsprodukten und/oder deren ein- oder mehrwertige Metallverbindungen,
**dadurch gekennzeichnet,**
daß das Kondensationsprodukt wasserlöslich ist und
a) aus symmetrischen oder unsymmetrischen Ketonen mit aliphatischen, araliphatischen, cyclischen oder aromatischen Kohlenwasserstoffresten mit mindestens einem nichtaromatischen Rest;
b) einem Aldehyd der Formel R-(CHO)ₙ, wobei n = 1 bis 2 und R = Wasserstoff, ein aliphatischer, araliphatischer, aromatischer oder heterocyclischer Rest sein kann, und
c) gegebenenfalls aus Säuregruppen, vorzugsweise aus Carboxy-, Sulfo-, Sulfamido-, Sulfoxy-, Sulfoalkylamin- oder Sulfoalkyloxy-Gruppen besteht,
an welches anionische und/oder nichtionische und/oder kationische ungesättigte Monomere in wäßriger Lösung gepfropft worden sind.

2. Pfropfpolymere nach Anspruch 1,
**dadurch gekennzeichnet,**
daß die Gesamtzahl der Kohlenstoff- und Heteroatome in den Ketonen 4 bis 12 beträgt.

3. Pfropfpolymere nach Anspruch 1,
**dadurch gekennzeichnet,**
daß die Gesamtzahl der Kohlenstoff- und Heteroatome in den Aldehyden einen Wert von 2 bis 11 aufweist.

4. Pfropfpolymere nach den Ansprüchen 1 bis 3, dadurch gekennzeichnet, daß das Molverhältnis Keton : Aldehyd : Säuregruppe 1 : 0,5 bis 18 : 0 bis 3 beträgt.

5. Pfropfpolymere nach den Ansprüchen 1 bis 4, dadurch gekennzeichnet, daß die Co-Kondensationskomponenten zum Keton-Aldehyd-Kondensationsprodukt Aminoplastbildner und/oder aromatische Verbindungen bzw. deren Kondensationsprodukte sind.

6. Pfropfpolymere nach Anspruch 5, dadurch gekennzeichnet, daß der Aminoplastbildner aus Harnstoff, Melamin, Dicyandiamid oder einem Guanamin besteht.

7. Pfropfpolymere nach Anspruch 5, dadurch gekennzeichnet, daß als aromatische Verbindung ein Phenolderivat verwendet worden ist.

8. Pfropfpolymere nach Anspruch 5, dadurch gekennzeichnet, daß als aromatische Verbindung ein Naphthalinderivat eingesetzt worden ist.

9. Pfropfpolymere nach den Ansprüchen 1 bis 4, dadurch gekennzeichnet, daß die Co-Kondensationskomponente zum Keton-Aldehyd-Kondensationsprodukt aus einem Lignin- und/oder Lignit-Derivat besteht.

10. Pfropfpolymere nach den Ansprüchen 1 bis 9, dadurch gekennzeichnet, daß die Metallverbindungen der Kondensations- bzw. Co-Kondensationsprodukte Metalle der Gruppe II A bis VIII A und/oder der Gruppe I B bis V B enthalten.

11. Pfropfpolymere nach den Ansprüchen 1 bis 10, dadurch gekennzeichnet, daß die anionischen ungesättigten Monomere Vinylverbindungen mit Carboxy-, Sulfo- oder Phosphorsäuregruppen darstellen.

12. Pfropfpolymere nach den Ansprüchen 1 bis 10, dadurch gekennzeichnet, daß die nichtionischen ungesättigten Monomere Vinyl- oder Acrylderivate sind.

13. Pfropfpolymere nach den Ansprüchen 1 bis 10, dadurch gekennzeichnet, daß die kationischen ungesättigten Monomere quaternäre Ammoniumverbindungen darstellen.

14. Pfropfpolymere nach den Ansprüchen 1 bis 13, dadurch gekennzeichnet, daß das Gewichtsverhältnis Keton-Aldehyd-Kondensations- bzw. Co-Kondensationsprodukt zu ungesättigtem Monomer 1 : 0,02 bis 10 beträgt.

15. Verfahren zur Herstellung von Pfropfpolymeren nach den Ansprüchen 1 bis 14, dadurch gekennzeichnet, daß man an die Keton-Aldehyd-Kondensations- bzw. Co-Kondensationsprodukte die ungesättigten Monomere in wäßriger Lösung bei einer Temperatur von 0 bis 100 °C aufpfropft.

16. Verwendung der Pfropfpolymeren nach den Ansprüchen 1 bis 14 als Dispergiermittel für anorganische Bindemittelsuspensionen und -lösungen, für wäßrige Tonsuspensionen und -lösungen oder Kohle-Wasser-Suspensionen, als Retentionsmittel, Verdickungsmittel, insbesondere für wäßrige Systeme sowie als Mittel zur Verhinderung des Anquellens von Ton in wäßrigen Systemen.

17. Verwendung nach Anspruch 16, dadurch gekennzeichnet, daß man als Dispergiermittel kurzkettige Keton-Aldehyd-Kondensationsprodukte mit einem Molgewicht < 150 000 und einem hohen Gehalt an Säuregruppen und/oder anionischen Monomeren einsetzt.

18. Verwendung nach Anspruch 16, dadurch gekennzeichnet, daß man als Retentionsmittel Pfropfpolymere auf Basis von langkettigen Keton-Aldehyd-Kondensationsprodukten mit einem Molgewicht > 50 000 heranzieht und die Pfropfpolymere anionische, nichtionische oder kationische Ladungen aufweisen.

19. Verwendung nach Anspruch 16, dadurch gekennzeichnet, daß man als Verdickungsmittel Pfropfpolymere auf Basis von sehr langkettigen Keton-Aldehyd-Kondensationsprodukten mit einem Molgewicht > 75 000 einsetzt und die Pfropfpolymere anionische, nichtionische oder kationische Ladungen aufweisen.

20. Verwendung nach Anspruch 16,
**dadurch gekennzeichnet,**
daß als Mittel zur Verhinderung des Anquellens von Ton in wäßrigen Systemen Pfropfpolymere auf Basis von kurz- bis langkettigen Keton-Aldehyd-Kondensationsprodukten mit einem Molgewicht von 500 bis 2 000 000 eingesetzt werden und die Pfropfpolymere kationische oder nichtionische Ladungen aufweisen.

## Claims

1. Graft polymers of ketone-aldehyde condensation and co-condensation products and/or the monovalent or polyvalent metal compounds thereof,
**wherein**
the condensation product is water-soluble and consists
a) of symmetric or asymmetric ketones containing aliphatic, araliphatic, cyclic or aromatic hydrocarbon residues with at least one nonaromatic residue,
b) an aldehyde of the formula R-(CHO)ₙ, in which n = 1 to 2 and R can be hydrogen or an aliphatic, araliphatic, aromatic or heterocyclic residue, and
c) optionally of acid groups, preferably carboxy, sulpho, sulphamido, sulphoxy, sulphoalkylamine or sulphoalkyloxy groups,
to which product anionic and/or nonionic and/or cationic unsaturated monomers have been grafted in aqueous solution.

2. Graft polymers as claimed in claim 1,
**wherein**
the total number of carbon atoms and heteroatoms in the ketones is 4 to 12.

3. Graft polymers as claimed in claim 1,
**wherein**
the total number of carbon atoms and heteroatoms in the aldehydes has a value of 2 to 11.

4. Graft polymers as claimed in claims 1 to 3,
**wherein**
the molar ratio of ketone : aldehyde : acid group is 1 : 0.5 to 18 : O to 3.

5. Graft polymers as claimed in claims 1 to 4,
**wherein**
the co-condensation components for the ketone-aldehyde condensation product are aminoplast formers and/or aromatic compounds or condensation products thereof.

6. Graft polymers as claimed in claim 5,
**wherein**
the aminoplast former consists of urea, melamine, dicyandiamide or a guanamine.

7. Graft polymers as claimed in claim 5,
**wherein**
a phenol derivative has been used as the aromatic compound.

8. Graft polymers as claimed in claim 5,
**wherein**
a naphthalene derivative has been used as the aromatic compound.

9. Graft polymers as claimed in claims 1 to 4,
**wherein**
the co-condensation component for the ketone-aldehyde condensation product consists of a lignin and/or lignite derivative.

10. Graft polymers as claimed in claims 1 to 9,
**wherein**
the metal compounds of the condensation and co-condensation products contain metals of group II A to VIII A and/or of group I B to V B.

11. Graft polymers as claimed in claims 1 to 10,
**wherein**
the anionic unsaturated monomers are vinyl compounds containing carboxy, sulpho or phosphoric acid groups.

12. Graft polymers as claimed in claims 1 to 10,
**wherein**
the nonionic unsaturated monomers are vinyl or acrylic derivatives.

13. Graft polymers as claimed in claims 1 to 10,
**wherein**
the cationic unsaturated monomers are quaternary ammonium compounds.

14. Graft polymers as claimed in claims 1 to 13,
**wherein**
the weight ratio of ketone-aldehyde condensation or co-condensation product to unsaturated monomer is 1 : 0.02 to 10.

15. Process for the production of graft polymers as claimed in claims 1 to 14,
**wherein**
the unsaturated monomers are grafted onto the ketone-aldehyde condensation or co-condensation products in aqueous solution at a temperature of O to 100°C.

16. Use of the graft polymers as claimed in claims 1 to 14 as dispersants for inorganic binder suspensions and solutions, for aqueous clay suspensions and solutions or coal-water suspensions, as retention agents, thickeners, in particular for aqueous systems, and as agents for preventing the swelling of clay in aqueous systems.

17. Use as claimed in claim 16,
**wherein**
short-chain ketone-aldehyde condensation products having a molecular weight of < 150,000 and a high content of acid groups and/or anionic monomers are used as dispersants.

18. Use as claimed in claim 16,
**wherein**
graft polymers on the basis of long-chain ketone-aldehyde condensation products having a molecular weight of > 50,000 are used as retention agents and the graft polymers have anionic, nonionic or cationic charges.

19. Use as claimed in claim 16,
**wherein**
graft polymers on the basis of very long-chain ketone-aldehyde condensation products having a molecular weight of > 75,000 are used as thickeners and the graft polymers have anionic, nonionic or cationic charges.

20. Use as claimed in claim 16,
**wherein**
graft polymers on the basis of short-chain to long-chain ketone-aldehyde condensation products having a molecular weight of 500 to 2,000,000 are used as agents for preventing the swelling of clay in aqueous systems and the graft polymers have cationic or nonionic charges.

## Revendications

1. Polymères greffés de produits de condensation cétone-aldéhyde ou de co-condensation et/ou de leurs composés métalliques uni- ou plurivalents caractérisés en ce que le produit de condensation est hydrosoluble et consiste en
a) cétones symétriques ou asymétriques avec des restes hydrocarbonés aliphatiques, araliphatiques, cycliques ou aromatiques avec au moins un reste non aromatique;
b) un aldéhyde de formule R-(CHO)ₙ où n = 1 à 2 et R peut être l'hydrogène, un reste aliphatique, araliphatique, aromatique ou hétérocyclique, et
c) éventuellement en groupes acides, de préférence en groupes carboxyle, sulfo, sulfamido, sulfoxy, sulfoalkylamine ou sulfoalkyloxy,
sur lequel des monomères insaturés anioniques et/ou non ioniques et/ou cationiques ont été greffés en solution aqueuse.

2. Polymères greffés selon la revendication 1 caractérisés en ce que le nombre total des atomes de carbone et des hétéroatomes dans les cétones est de 4 à 12.

3. Polymères greffés selon la revendication 1 caractérisés en ce que le nombre total des atomes de carbone et des hétéroatomes dans les aldéhydes présente une valeur de 2 à 11.

4. Polymères greffés selon les revendications 1 à 3 caractérisés en ce que le rapport molaire cétone:aldéhyde:groupe acide est de 1:0,5 à 18:0 à 3.

5. Polymères greffés selon les revendications 1 à 4 caractérisés en ce que les composants de co-condensation pour le produit de condensation cétone-aldéhyde sont des formateurs d'aminoplastes et/ou des composés aromatiques ou leurs produits de condensation.

6. Polymères greffés selon la revendication 5 caractérisés en ce que le formateur d'aminoplastes consiste en urée, mélamine, dicyandiamide ou en une guanamine.

7. Polymères greffés selon la revendication 5 caractérisés en ce qu'un dérivé phénolique a été utilisé comme composé aromatique.

8. Polymères greffés selon la revendication 5 caractérisés en ce qu'un dérivé du naphtalène a été utilisé comme composé aromatique.

9. Polymères greffés selon les revendications 1 à 4 caractérisés en ce que le composant de co-condensation pour le produit de condensation cétone-aldéhyde consiste en un dérivé de lignine et/ou de lignite.

10. Polymères greffés selon les revendications 1 à 9 caractérisés en ce que les composés métalliques des produits de condensation ou de co-condensation contiennent des métaux des groupes II A à VIII A et/ou des groupes I B à V B.

11. Polymères greffés selon les revendications 1 à 10 caractérisés en ce que les monomères insaturés anioniques sont des composés vinyliques avec des groupes carboxyle, sulfo ou acide phosphorique.

12. Polymères greffés selon les revendications 1 à 10 caractérisés en ce que les monomères insaturés non ioniques sont des dérivés vinyliques ou acryliques.

13. Polymères greffés selon les revendications 1 à 10 caractérisés en ce que les monomères insaturés cationiques sont des composés d'ammonium quaternaire.

14. Polymères greffés selon les revendications 1 à 13 caractérisés en ce que le rapport massique produit de condensation cétone-aldéhyde ou de co-condensation à monomère insaturé est de 1:0,02 à 10.

15. Procédé de préparation de polymères greffés selon les revendications 1 à 14 caractérisé en ce que l'on greffe sur les produits de condensation cétone-aldéhyde ou de co-condensation les monomères insaturés en solution aqueuse à une température de 0 à 100°C.

16. Utilisation des polymères greffés selon les revendications 1 à 14 comme dispersants pour suspensions et solutions de liants inorganiques, pour suspensions et solutions aqueuses d'argile ou suspensions charbon-eau, comme agents de rétention, épaississants, en particulier pour systèmes aqueux, ainsi que comme agents pour empêcher le gonflement de l'argile dans des systèmes aqueux.

17. Utilisation selon la revendication 16 caractérisée en ce que l'on utilise comme dispersants des produits de condensation cétone-aldéhyde à courte chaîne ayant une masse moléculaire < 150 000 et une haute teneur en groupes acides et/ou en monomères anioniques.

18. Utilisation selon la revendication 16 caractérisée en ce que l'on utilise comme agents de rétention des polymères greffés à base de produits de condensation cétone-aldéhyde à longue chaîne ayant une masse moléculaire > 50000 et les polymères greffés présentent des charges anioniques, non ioniques ou cationiques.

19. Utilisation selon la revendication 16 caractérisée en ce que l'on utilise comme épaississants des polymères greffés à base de produits de condensation cétone-aldéhyde à très longue chaîne ayant une masse moléculaire > 75000 et les polymères greffés présentent des charges anioniques, non ioniques ou cationiques.

20. Utilisation selon la revendication 16 caractérisée en ce que l'on utilise comme agents pour empêcher le gonflement de l'argile dans des systèmes aqueux des polymères greffés à base de produits de condensation cétone-aldéhyde à chaîne courte à longue ayant une masse moléculaire de 500 à 2 000 000 et les polymères greffés présentent des charges cationiques ou non ioniques.
